# EUROPEAN PATENT APPLICATION

(11) **EP 0 819 745 A1**
(43) Date of publication of application: **21.01.1998**
(21) Application number: 96116715.2
(22) Date of filing: 17.10.1996
(51) Int. Cl.: C09D 199/00, C09D 101/00, B05D 1/12, B05D 1/14

(54) **Coating material, manufacturing method therefor and coating method**

(30) Priority: 17.07.1996 JP 187370/96
(71) Applicant: CHAFFLOSE CORPORATION, Kanagawa-Ken (JP)
(72) Inventor: Sasaya, Koji, c/o Chafflose Corporation, Yokohama-shi, Kanagawa-ken (JP)
(74) Representative: Brown, John David

(57) **Abstract**

To enable surface finish to be performed with a coating material using natural material while preventing divergence of chemical substances so that problems in health and diseases caused from the conventional chemical substances are prevented. A natural adhesive agent is sprayed to a subject of coating, and then a coating material consisting of pulverized material of natural material and/or pulverized material of cellulose sponge is sprayed.

## Description

### BACKGROUND OF THE INVENTION

### 1. Field of the Invention

The present invention relates to a coating material using natural material, such as vegetation and marine products, a manufacturing method therefor and a coating method.

### 2. Background Art

In recent years, new building materials have been world-widely employed as the building materials relating to interior furnishings for newly built general houses, office buildings, public buildings and the like. Also in the surface finishing works for the interior furnishings, adhesive agents made of chemical coating materials and chemical substances have been used.

However, since a multiplicity of chemical substances are contained in the new building material, the new building material and the adhesive agent composed of the chemical coating material and chemical substances diverge, into air, substances, such as volatile organic compounds (VOC), e.g. formaldehyde. Thus, the divergence has caused problems in health, such as dizziness, headaches, and diseases to occur frequently. In view of the foregoing, a requirement has arisen in that the coating materials to be applied to the surface of the ceiling, that of the wall and the outer surface of furniture do not diverge harmful chemical substances.

To solve the problems above, the inventor of the present invention has paid attention to a fact that natural material, such as vegetation and marine products, is pulverized and cellulose sponge, which is also natural material, is pulverized and the obtained pulverized materials can be used as the materials for a coating material and a fact that the above-mentioned natural materials do not diverge chemical substances which will cause the problems in health and diseases.

### SUMMARY OF THE INVENTION

Accordingly, in view of the foregoing, an object of the present invention is to enable surface finishing without divergence of chemical substances to be performed with a coating material using natural material and to prevent problems in health and diseases caused from the above-mentioned chemical substances.

The present invention has been found in view of the foregoing and provides a coating material comprising at least either of pulverized material of natural material or pulverized material of cellulose sponge in order to solve the above-mentioned problem.

According to other inventions, there are provided a method of manufacturing a coating material comprising the steps of pulverizing natural material and using obtained pulverized material as the coating material, a method of manufacturing a coating material comprising the steps of pulverizing cellulose sponge and using obtained pulverized material as the coating material and a method of manufacturing a coating material comprising the step of mixing pulverized material obtained by pulverizing natural material and pulverized material obtained by pulverizing cellulose sponge with each other so that the coating material is obtained. By providing the methods of manufacturing the above-mentioned coating materials, the foregoing problem is intended to be overcome.

Moreover, according to another invention, there are provided a coating method comprising the steps of spraying an adhesive agent, preferably a natural adhesive agent, to a subject to be coated and spraying or electrostatically flocking a coating material of the above natural material to a surface coated with the adhesive agent. By providing the above-mentioned methods, the foregoing problem is intended to be overcome.

### DETAILED DESCRIPTION OF THE PREFERRED EMBODIMENTS

Embodiments of the present invention will now be described.

A coating material according to the present invention is a pulverized material of natural material, a pulverized material of cellulose sponge, or a mixture thereof. As a matter of course, also the cellulose sponge is formed from natural material and made by using natural pulp obtained from ligneous material, leaves, weed or the like. The pulverized material of the natural material to be mixed together with the pulverized material of the cellulose sponge is in the form of pulverized material obtained by drying and pulverizing vegetation materials such as ligneous materials and non-ligneous materials, and marine products.

The ligneous material may be a material which is generally employed as a building material, for example, pine, a Japanese cedar, a hinoki, a sawara cypress, fir, hemlock, a keyaki, a Japanese oak, a Japanese bead tree, an oak tree, lauan, Japanese cypress and a paulownia. They may be saw dust, which is abolished in a sawing process, abolished materials generated from a decomposed house, and scrap woods (large size saw dust) of precious woods.

The non-ligneous materials may be frutescent plants, such as flax, hemp, ramie, jute, a kaya tree, Juncaceae plants, a rush, papyrus, kenaf, ambary, cogongrasses, rice straw, a kozo and a mitsumata plant. Moreover, skins of seeds and fruits, for example, a hull which is abolished, may be employed.

Moreover, other vegetation materials, such as sludge generated during a paper making process and dried and pulverized into powder, and the materials above, which are pulverized and powdered in a raw state, may be employed.

Also marine products may be employed such that marine algae, sea grasses, shells and their scraps are dried and pulverized so as to be formed into powder.

It is preferable that the particle size of the powdered material be 0.001 to 0.009 mm in a case where the material is used as a coating material. If the material is used as a material of a wall, the preferred particle size is 0.2 to 1.5 mm. Although the particle size is not limited specifically, an appropriate particle size, which enables appropriate appearance of the material to be obtained, is selected, or particles sizes in an appropriate range suitable to the employed coating method are employed.

By selecting and pulverizing the foregoing natural material, a coating material can be obtained which uses the hue of the natural material. For example, use of material obtained by pulverizing chaff into powder enables a brown coating material to be obtained. Use of the Japanese cypress in the form of powder obtained by pulverizing enables a light brown coating material to be obtained.

The foregoing cellulose sponge may be powdered to have fineness similar to that of the pulverized material of the natural material or pulverized to a degree in which blocks having a certain size exist. By mixing the pulverized material of the cellulose sponge formed into small blocks and the pulverized material of the natural material, a coating material using the hue of the natural material can be obtained. By employing a coating method to be described later, a finished surface having emphasized rough touch can be obtained. The mixing ratio of the pulverized material of the natural material and the pulverized material of the cellulose sponge may arbitrarily be selected. By changing the mixing ratio, the hue, the appearance and the touch can be adjusted.

Although the above-mentioned coating material is obtained by mixing the pulverized material of the natural material and the pulverized material of the cellulose sponge, the present invention is not limited to this. Only the pulverized material of the natural material may be used as the coating material or only the pulverized material of the cellulose sponge may be used as the coating material. Similarly to the foregoing case in which selection of the natural material to obtain the pulverized material of the natural material enables the hue and the appearance to be adjusted, selection of the material for making the cellulose sponge enables the hue and the appearance of the cellulose sponge to be adjusted. Therefore, also the hue and the appearance of the coating material composed of the pulverized material of the cellulose sponge can be adjusted. The cellulose sponge includes block type cellulose sponge and cloth type cellulose sponge either of which may be employed. In a case of the coating material to be mixed with the pulverized material of the natural material, either of the block type material or the cloth type material may be employed.

The coating material having the foregoing structure is applied to a subject of coating by a spraying method. Initially, an adhesive agent is, by a spraying machine (a spraying machine for use in a wall surface coating work may be employed), sprayed to the subject of coating. Although a synthetic adhesive agent or a natural adhesive agent may be employed in this process, it is preferable that the natural adhesive agent be employed to prevent a problem for health. The natural adhesive agent may be an animal adhesive agent, such as animal glue, fish glue, albumin or casein; or a vegetable adhesive agent, for example, starch glue, protein of wheat and soybean glue. In general, animal glue is preferably employed for buildings.

Then, a similar coating machine is used to spray the above-mentioned coating material to the surface coated with the adhesive agent formed by spraying of the adhesive agent. As a result, a decorated surface formed by the natural material can be formed on, for example, the surface of the ceiling, the surface of the wall or the outer surface of the furnishing. As a matter of course, the material for the ceiling, the wall plate material or the material for the furnishing may previously be coated with the coating material.

Note that although the coating material is fixed by natural drying after the coating material has been sprayed, hot air drying may be employed to perform forcible drying to fix the coating material.

Another coating method is a method in which the coating material is electrostatically flocked on the surface of the subject of coating which has been coated with the adhesive agent so as to fix the coating material. The foregoing method may employ any of the coating materials respectively having the foregoing structures. In a case of the pulverized material of the cloth type cellulose sponge is used in particular, a coating material having a structure such that the cellulose sponge is pulverized to obtain fibers having substantially uniform lengths is obtained, followed by electrostatically flocking the obtained coating material onto the surface coated with the adhesive agent. As a result, a velvet-like coated surface can be formed with the coating material.

Since the present invention described above has the structure such that the coating material is made of at least either of the pulverized material of the natural material or the pulverized material of the cellulose sponge, formaldehyde or volatile organic compounds are not diverged from the coating material. Therefore, the problem in health and diseases does not arise which is caused from chemical substances diverged from the conventional new building materials, chemical coating materials and chemical adhesive agent. Since cellulose of the cellulose sponge, which is the employed material, has antifungal properties, the surface coated with the coating material is able to obtain the antifungal properties. Moreover, the surface coated with the coating material is able to obtain the moisture adsorption, air permeability and a deodorant effect of the cellulose sponge. Since the pulverized material of the natural material, such as the vegetation or the marine products, is mixed, selection of the natural material enables the natural aroma of the selected material to be diverged. As for the hue and the appearance of the coated surface, the hue and the appearance peculiar to the natural material can easily be used.

Since the coating material is applied to the subject of the coating by spraying or electrostatical flocking, the coating material can be applied to fine portions of the subject to be coated. Moreover, a uniform coated surface can easily be obtained. The coating work does not require a skilled worker because it can easily be performed. Thus, an excellent practical effect can be obtained.

The features disclosed in the foregoing description, in the following claims and/or in the accompanying drawings may, both separately and in any combination thereof, be material for realising the invention in diverse forms thereof.

## Claims

1. A coating material comprising at least either of pulverized material of natural material or pulverized material of cellulose sponge.

2. A method of manufacturing a coating material comprising the steps of pulverizing natural material and using obtained pulverized material as the coating material.

3. A method of manufacturing a coating material comprising the steps of pulverizing cellulose sponge and using obtained pulverized material as the coating material.

4. A method of manufacturing a coating material comprising the step of mixing pulverized material obtained by pulverizing natural material and pulverized material obtained by pulverizing cellulose sponge with each other so that the coating material is obtained.

5. A coating method comprising the steps of spraying an adhesive agent to a subject to be coated and spraying a coating material according to claim 1 to a surface coated with said adhesive agent.

6. A coating method according to clam 5, wherein said adhesive agent is a natural adhesive agent.

7. A coating method comprising the steps of spraying a natural adhesive agent to a subject to be coated and electrostatically flocking a coating material according to claim 1 to a surface coated with said natural adhesive agent.

8. A coating method according to clam 7, wherein said adhesive agent is a natural adhesive agent.
